# EUROPÄISCHE PATENTSCHRIFT

(11) **EP 2 057 891 B1**
(45) Veröffentlichungstag und Bekanntmachung des Hinweises auf die Patenterteilung: **15.09.2010**
(21) Anmeldenummer: 08168297.3
(22) Anmeldetag: 04.11.2008
(51) Int. Cl.: A01F 15/14

(54) **Knotereinrichtung zur gleichzeitigen Bildung von zwei Knoten**
Knotting device to form two knots at the same time
Dispositif de noeuds destiné à la formation simultanée de deux noeuds

(30) Priorität: 09.11.2007 DE 102007000678
(43) Veröffentlichungstag der Anmeldung: 13.05.2009
(73) Patentinhaber: Raussendorf Maschinen- und Gerätebau GmbH, 02692 Obergurig (DE)
(72) Erfinder: Dr. Weidig, Klaus, 01809 Dohna (DE); Dipl.-Ing. Voigt, Jürgen, 01848 Hohnstein (DE); Dr.-Ing. Helemann, Carmen, 01844 Neustadt (DE); Dipl.-Ing. Porsche, Andreas, 01169 Dresden (DE); Dipl.-Ing. Lüttich, Hans-Robert, 01809 Dohna (DE); Ing. Zimmer, Michael, 01844 Neustadt (DE)
(74) Vertreter: Sperling, Thomas

(56) Entgegenhaltungen:
- DE-A1- 2 460 464
- DE-A1- 2 820 241
- FR-A- 1 229 138
- FR-E- 49 910
- US-A- 3 667 377

## Beschreibung

Die Erfindung betrifft eine Knotereinrichtung zur gleichzeitigen Bildung von zwei Knoten, wie sie beispielsweise für Großballenpressen benutzt wird, um mittels zweier Bindegarnstränge, einem Ober- und einem Unterfaden, an umspannten quaderförmigen Pressballen einen Endknoten des gepressten Ballens zu bilden und gleichzeitig einen Anfangsknoten für einen neuen Ballen zu erzeugen.

Derartige Großballenpressen sind landwirtschaftliche Maschinen, in denen beispielsweise Stroh, Heu, Silage und nachwachsende Rohstoffe zu kompakten Ballen gepresst werden, welche dann mit Fäden bzw. Bindegarn umschlungen und weitgehend in der gepressten Form fixiert gehalten werden. Weitere Anwendungsgebiete für gattungsgemäße Knotereinrichtungen sind Müll- oder Abfallpressen.
Im Stand der Technik sind so genannte Einfadensysteme bekannt, welche mit nur einer Bindegarnrolle auskommen und einzelne Knoten bilden. Diese Systeme arbeiten folglich mit einer Fadenzuführung und besitzen auch nur einen Knoterschnabel. Durch das Einpressen des Erntegutes in eine Fadenlänge beim Einfadensystem sind die hohen Reibkräfte zwischen Pressballen und Faden nachteilig und führen häufig zum Herausreißen des Fadens aus dem Fadenhalter bzw. zum Zerreißen des Fadens.
Um die Effizienz der Maschinen zu erhöhen, wurden Systeme entwickelt, welche größere Pressdrücke am Pressballen erreichen, was die Effizienz der Lagerung und des Transports der Pressballen erhöhte. Diese Systeme werden als Zweifadensysteme bezeichnet, die in unterschiedlichen Ausführungen mit einem Knoterschnabel und getrennten Fäden arbeiten. Die Fäden werden nach ihrer Lage als Oberfaden und Unterfaden bezeichnet. Die Knoten, die End- und Anfangsknoten, werden mit einer oder zwei Knüpferwellenumdrehungen, nacheinander gebildet. Weitere Zweifadensysteme weisen bereits zwei Knoterschnäbel zur weitgehend zeitgleichen bzw. zeitversetzten Bildung von zwei Knoten auf.

Eine Vorrichtung dieser Art wird in der DE 28 20 241 A1 beschrieben. Daraus ist ein Verfahren zum Anordnen einer Schnur um einen Ballen und eine Vorrichtung zur Durchführung des Verfahrens bekannt, bei der zwei Knoten nacheinander erzeugt werden. Die Knotervorrichtung knüpft mit zwei separaten Knoterschnäbeln, die den gleichen Drehsinn haben, selbstständig einen End- und einen Anfangsknoten zeitversetzt.

Die Ausführung der beiden Knoter als separate und unabhängig voneinander wirkende Elemente hat zur Folge, dass auch separate Knoterscheiben, welche auch als Knüpferscheiben bezeichnet werden, bis hin zu separaten Knoterantriebssystemen erforderlich sind, um die gewünschten zwei Knoten in zumindest teilweise übereinstimmenden Zeitabläufen zu knüpfen.

Der Nachteil dieser Vorrichtung besteht ersichtlich darin, dass die beiden Knoterschnäbel nicht zeitgleich in Bewegung gesetzt werden können und die Bewegung auch nicht zeitgleich endet. Weiterhin nachteilig ist ein hoher konstruktiver und somit auch kostenintensiver Aufwand, um die Knoter separat anzutreiben und, wie gewünscht, zu synchronisieren. Mechanisch aufwändige Lösungen haben immer auch den Nachteil der höheren Störanfälligkeit.

Der Erfindung liegt die Aufgabe zugrunde, eine Knotereinrichtung für Großballenpressen zur Verfügung zu stellen, die mit geringem konstruktivem und apparativem Aufwand effizient gleichzeitig zwei Knoten erzeugen kann.

Die Aufgabe der Erfindung wird durch eine Knotereinrichtung zur gleichzeitigen Bildung von zwei Knoten gelöst, welche dadurch gekennzeichnet ist, dass ein Knoterritzel, ein Stirnrad und ein Knoterschnabel auf einer Antriebswelle angeordnet sind und dass auf einer zur Antriebswelle beabstandeten Abtriebswelle ein zweites Stirnrad und ein zweiter Knoterschnabel angeordnet sind, wobei die zwei Stirnräder miteinander in Eingriff stehen und die beiden Wellen mit den Knoterschnäbeln damit gleichzeitig und gegensinnig bewegbar ausgebildet sind, wobei die Antriebswelle über das Knoterritzel antreibbar ausgebildet ist.
Die beiden Knoterschnäbel sind in ihrer Form spiegelbildlich bzw. spiegelsymmetrisch zu einer Mittelebene zwischen den beiden Knoterschnäbeln ausgeführt.

Der Abstand von Antriebs- und Abtriebswelle zueinander bestimmt die Art des gebildeten Knotens mit. Bei einem kleineren Abstand der Wellen zueinander, von beispielsweise kleiner oder gleich 90 mm, werden Knoten mit durchgezogenem Fadenende gebildet. Bei einem größeren Abstand der Wellen zueinander, beispielsweise größer 100 mm, werden Knoten mit Schlaufe und eingebundenem Fadenende gebildet, welche einen höheren Widerstand gegen das Aufziehen der Knoten haben. Erfahrungsgemäß werden in einem Übergangsbereich zwischen zirka 90 mm bis 100 mm in Abhängigkeit diverser weiterer Parameter durchgezogene Knoten oder Schlaufenknoten gebildet.

Nach einer bevorzugten Ausgestaltung der Erfindung wird das Knoterritzel durch eine auf einer Knüpferwelle angeordneten Knüpferscheibe angetrieben, wobei die Knüpferscheibe eine mit dem Knoterritzel korrespondierende Verzahnung aufweist.

Weiterhin sind vorteilhaft zwei seitliche Fadenandrücker benachbart zu den beiden Knoterschnäbeln vorgesehen und diesen zugeordnet.
Vorteilhaft ist weiterhin ein mittlerer Fadenandrücker vorgesehen, der zwischen den beiden Knoterschnäbeln angeordnet ist und am unteren Ende eine konkave Form zur Aufnahme und Positionierung von Ober- und Unterfaden aufweist und der für den Durchgang der Klinke am Ende geschlitzt ist.
Diese konstruktive Ausgestaltung ermöglicht dem mittleren Fadenandrücker seine Doppelfunktion. Der mittlere Fadenandrücker erfüllt zwei grundlegende Funktionen, nämlich das Bilden einer Fadenreserve für die Knotenbildung und die exakte Fadenpositionierung während der Knotenbildung. Zur Bildung der Fadenreserve ist der mittlere Fadenandrücker speziell mit einer bestimmten Eingrifflänge ausgestattet, welche im jeweiligen Einzelfall auch abhängig von der Art des zu bindenden Knotens ist.

Dem mittleren Fadenandrücker zugeordnet ist eine Klinke mit einem Messer, wobei der hintere Bereich der Klinke als Messer ausgebildet ist und dem Zertrennen des Fadens nach Abschluss der Knotenbildung dient. Dazu ist der mittlere Fadenandrücker an seinem schwenkbaren Ende derart geschlitzt ausgeführt, dass die Klinke mit Messer zum Ende der Einschwenkbewegung hin durch den Schlitz hindurch in eine Arretierungsstellung klappt, wobei gleichzeitig die Fäden vom mittleren Fadenhalter gehalten werden.

Weiterhin vorteilhaft wird die Erfindung ausgebildet, wenn der mittlere Fadenandrücker mittels einer Steuerbahn in der Knüpferscheibe durch die Bewegung derselben angetrieben wird.

Den Knoterschnäbeln zugeordnet sind Knotenabzieher vorgesehen, die nach der Bildung der Knoten ein Abziehen der gebildeten Knoten von den Knoterschnäbeln ermöglichen und damit den Bindeprozess beenden, ehe nach Bildung des nachfolgenden Ballens der Prozess der Fadenholung und Knotenbildung von vorn beginnt.

Eine vorteilhafte Ausgestaltung der Erfindung besteht in der parallelen Beabstandung von Antriebs- und Abtriebswelle.
Alternativ dazu können durch eine geeignete Verzahnung die Antriebs- und Abtriebswelle in einem Winkel zueinander ausgeführt werden.

Ein erfindungsgemäßes Verfahren zur Erzeugung von zwei Knoten wird dadurch realisiert, dass bei einer Umdrehung der Knüpferwelle eine Nadel mittels einer Einschwenkbewegung den Unterfaden zum Oberfaden führt und die Fäden an den Knoterschnäbeln positioniert. Nachfolgend wird durch Einschwenken des mittleren Fadenandrückers eine Fadenreserve zur Bildung der Knoten gebildet und dabei werden die Fadenstränge hinter der Klinke mit dem Messer auf deren Rückseite positioniert sind. Zeitlich abgestimmt zum mittleren Fadenandrücker fixieren die seitlichen Fadenandrücker beidseits der Knoterschnäbel den Ober- und Unterfaden in der richtigen Lage für die Knotenbildung, welche durch die beiden sich jetzt gleichzeitig und gegensinnig drehenden Knoterschnäbel beginnt, wonach der mittlere Fadenandrücker zurückschwenkt und dabei die nötige Fadenreserve freigibt und beim Zurückgehen die beiden Fäden auf das Messer auf der Rückseite der Klinke gelegt werden. Die beiden gebildeten Knoten werden mittels der den Knoterschnäbeln zugeordneten Knotenabzieher nachfolgend abgestreift und die Fäden dabei mittig zwischen den Knoterschnäbeln zertrennt. Die Nadel schwenkt dann in die Ausgangsstellung zurück. Bei der Bildung der Knoten befindet sich die Nadel annähernd in Ruhestellung.

Vorteilhaft bei der dargestellten Erfindung ist insbesondere die konstruktiv relativ unaufwändige Gestaltung der Knotereinrichtung, welche in der Lage ist, zwei Knoten zeitgleich und parallel zu bilden. Dabei wird konzeptionsgemäß ausgenutzt, dass nur ein Knoterschnabel direkt angetrieben wird und innerhalb des Antriebsstranges des ersten Knoterschnabels über ein Stirnrad der zweite Knoterschnabel parallel und gegensinnig sich drehend angetrieben wird.

Weiterhin vorteilhaft ist die Lösung der Bildung der Fadenreserve durch einen mittleren Fadenandrücker, wobei gleichzeitig ohne zusätzlichen apparativen Aufwand die Fadenreserve gebildet und nach Abschluss des Knotprozesses der Faden durch seine Lageänderung getrennt wird.

Weiterhin vorteilhaft ist, dass eine hohe Bindesicherheit erreicht wird und dass beim Trennen des Fadens Reststücke vermieden werden. Dies erhöht die Sicherheit zur Vermeidung von Unfällen beim Füttern von Tieren mit den Großballen, da Unfälle und Probleme verursachende längere Fadenreststücke vermieden werden. Auch wird die Betriebssicherheit der Bindesysteme erhöht, da ein Verstopfen und Blockieren durch Reststücke und Fadenreste nicht mehr erfolgen kann.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Fig. 1:: Ausschnitt einer Großballenpresse,
- Fig. 2:: Knotereinrichtung und
- Fig. 3:: Detail Knotereinrichtung.

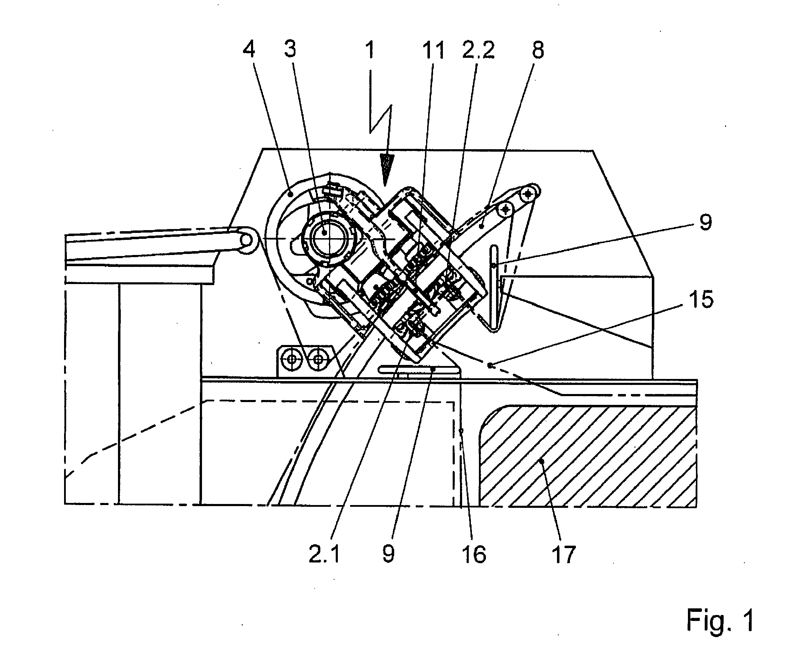

In Figur 1 ist ein Ausschnitt einer Großballenpresse schematisch dargestellt. Zentrum der Ansicht ist die Knotereinrichtung 1, welche oberhalb des Presskanales der Großballenpresse angeordnet ist. Die gattungsgemäßen Großballenpressen nutzen einen Oberfaden 15 und einen Unterfaden 16, welche das Pressgut, den Großballen 17, umschließen. Die Knotereinrichtung 1 ist räumlich vor dem fertig gepressten Großballen 17 angeordnet und knotet den Endknoten des fertigen Pressballens sowie gleichzeitig den Anfangsknoten des nächsten zu pressenden Ballens.

Eine Nadel 8 führt den Ober- und Unterfaden 15, 16 in die Knotereinrichtung 1 ein und hält die parallel geführten Fäden während des Knotens oberhalb der Knoterschnäbel 2 nahezu in Ruhelage.
Die seitlichen Fadenandrücker 9, jeweils außen benachbart zu den Knoterschnäbeln 2 angeordnet, fixieren die beiden Fäden 15 und 16 jeweils während der Knotenbildung. Der mittlere Fadenandrücker 11 führt die beiden Fäden zwischen den Knoterschnäbeln 2 und bildet eine Fadenreserve, welche für die anschließende Bildung der Knoten notwendig ist.

Der Antrieb der Knotereinrichtung 1 erfolgt über die Drehung der Knüpferwelle 3, auf welcher die Knüpferscheibe 4 sitzt und welche die Drehbewegung über weitere Elemente auf die Knoterschnäbel 2 zur Bildung der Knoten überträgt.

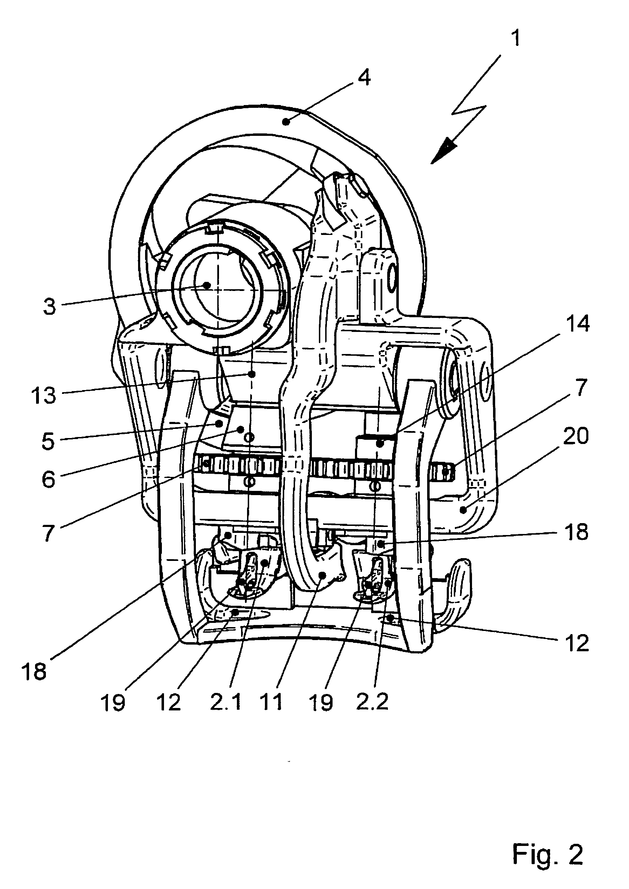

In Figur 2 ist eine Knotereinrichtung 1 etwas detaillierter dargestellt. Die Knotereinrichtung 1 besteht im Wesentlichen aus zwei Wellen 13, 14.

Die erste Welle ist die Antriebswelle 13, welche mit einem Knoterritzel 6, einem Stirnrad 7 und einem Knoterschnabel 2.1 als Antriebsstrang ausgebildet ist.

In der dargestellten Ausführung der Erfindung ist parallel zur Antriebswelle 13 eine Abtriebswelle 14 angeordnet. Die Antriebs- und die Abtriebswelle 13, 14 stehen in Wirkverbindung über die Stirnräder 7. Das Stirnrad 7 des Antriebsstranges 13 steht mit dem Stirnrad 7 des Abtriebsstranges 14 in Eingriff und überträgt die Drehbewegung dadurch auf den Abtriebsstrang 14 und dessen Knoterschnabel 2.2.

Die Bewegungsübertragung innerhalb der Knotereinrichtung 1 lässt sich somit zusammenfassend folgendermaßen beschreiben: Über die Knüpferwelle 3 wird die Knüpferscheibe 4 bewegt, welche in einem Umfangsbereich eine Verzahnung 5 aufweist. Die Verzahnung 5 korrespondiert mit dem Knoterritzel 6 und treibt dieses an. Die über das Knoterritzel 6 angetriebene Antriebswelle 13 bewegt das zugehörige Stirnrad 7. Mit dem Stirnrad 7 der Antriebswelle 13 steht das Stirnrad 7 der Abtriebswelle 14 in Eingriff, so dass bei einer Bewegung der Antriebswelle 13 gleichzeitig und gegensinnig die Abtriebswelle 14 bewegt wird. Die unteren Wellenenden der Antriebs- und Abtriebswelle 13 und 14 werden von den spiegelbildlich geformten Knoterschnäbeln 2.1, 2.2 gebildet, die sich damit gleichfalls gegensinnig drehen. Im Knoterrahmen 20 der Knotereinrichtung 1 sind die ebenfalls spiegelbildlich geformten Nocken 18 zur Steuerung der Bewegung der Zungen 19 der Knoterschnäbel 2.1, 2.2 angeordnet.

Der mittlere Fadenandrücker 11 wird mit der Bewegung der Knüpferwelle 3 und der Knüpferscheibe 4 synchronisiert über eine Kurvenbahn auf der Knüpferscheibe 4 bewegt und ist drehbeweglich am Knoterrahmen 20 gelagert.

In der dargestellten Ausgestaltung der Erfindung sind die Antriebswelle 13 und die Abtriebswelle 14 parallel zueinander beabstandet. Zwischen ihnen wird der mittlere Fadenandrücker 11 eingeschwenkt und nimmt die beieinander liegenden Fäden, den Oberfaden 15 und Unterfaden 16, mit in eine hintere Stellung. Durch die hintere bzw. innere Stellung des mittleren Fadenandrückers 11 wird eine Fadenreserve gebildet und die beiden Fäden 15, 16 werden von vorn über die Klinke mit dem Messer 10 weggedrückt und werden nach dem Zurückschwenken der Klinke 10 zunächst hinter der Klinke mit dem Messer 10 vom mittleren Fadenandrücker 11 gehalten. Der mittlere Fadenandrücker 11 ist dazu an seinem Ende ausgeformt und geschlitzt, um die Fäden 15, 16 exakt in ihrer Lage zu positionieren und weit genug hinter der Klinke 10 mit dem Messer auf deren Rückseite zu positionieren und dadurch eine Fadenreserve zu bilden sowie gleichzeitig die Ausgangsstellung zur Trennung des Fadens nach Abschluss der Knotenbildung zu erreichen.

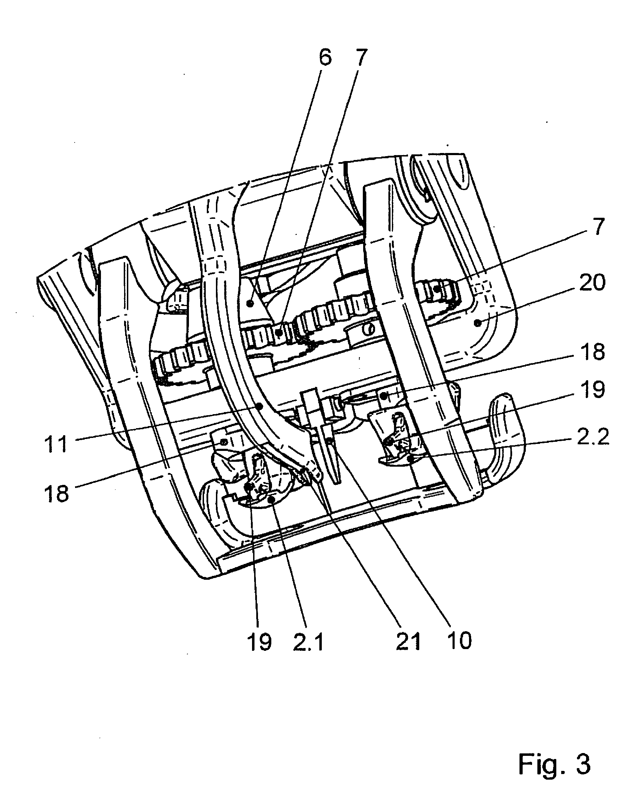

In Figur 3 ist der untere Teil der Knotereinrichtung 1 vergrößert dargestellt, welcher insbesondere den mittleren Fadenandrücker 11 mit seinem geteilten und konkav geformten Ende sowie die mit ihm korrespondierende Klinke mit dem Messer 10 zeigt.
Das konkav ausgeformte Ende des mittleren Fadenandrückers 11 nimmt somit bei seiner Einschwenkbewegung die beiden Fäden 15 und 16 mit und diese drücken zum Ende der Einschwenkbewegung hin die Klinke 10 aus deren Ausgangsstellung nach hinten.
Kurz vor Erreichen der Endstellung des mittleren Fadenandrückers 11 schwenkt die Klinke 10 hinter die Fäden 15 u 16 in den Schlitz 21 des mittleren Fadenandrückers 11 zurück und verharrt schließlich wieder in der Ausgangsstellung.

Nachdem die Klinke 10 eingeschwenkt ist, verharrt der mittlere Fadenandrücker 11 in der Endstellung. Wenn der mittlere Fadenandrücker 11 von der Kurvenbahn der Knüpferscheibe 4 gesteuert wieder zurückschwenkt, wird die Klinke mit ihrem rückseitigen Messer 10 freigelegt und der Oberfaden 15 und der Unterfaden 16 drücken nun gegen das Messer. Die in dieser Richtung arretierte Klinke 10 bietet diesem Druck einen Widerstand, und sobald der Knotenabzug gestartet ist, werden die Fäden 15, 16 durch das Messer der Klinke 10 zertrennt.

Die einzelnen Elemente der Knotereinrichtung 1 können alternativ zur dargestellten Antriebsform einzeln oder gemeinsam durch Motoren angetrieben werden. Hierfür können elektrische, hydraulische oder pneumatische Motoren verwendet werden.

Die Funktion der Knotereinrichtung 1 und ihre Wechselwirkung zur Großballenpresse zur Bildung von Press- oder Großballen 17 wird nachfolgend auszugsweise beschrieben.

Der Großballen 17 wird im nicht vollständig dargestellten Presskanal in Figur 1 geführt und von einem Oberfaden 15 und einem Unterfaden 16 umschlungen. Die beiden Fäden 15, 16 werden durch eine Bewegung der Nadel 8 gemeinsam durch die Knotereinrichtung 1 hindurch geführt und über den Knoterschnäbeln 2 positioniert. Der Knoterschnabel 2.1 formt den Abschlussknoten für den fertigen Großballen 17 und der Knoterschnabel 2.2 formt den Anfangsknoten für den nächsten zu bildenden Großballen. Die Fadenreserve zur Bildung der Knoten wird durch die Einschwenkbewegung des mittleren Fadenandrückers 11 gebildet, der die beiden Fäden 15 und 16 zwischen den Knoterschnäbeln 2.1, 2.2 hindurch nach innen drückt. Bei der Bewegung des mittleren Fadenandrückers 11 wird der doppelte Fadenstrang hinter die Klinke 10 mit dem Messer gedrückt und zunächst gehalten. Die seitlichen Fadenandrücker 9 fixieren nachfolgend oder gleichzeitig den aus Oberfaden 15 und Unterfaden 16 gebildeten Fadendoppelstrang an den Knoterschnäbeln 2.1, 2.2.

Die Energie zur Bildung der Knoten wird in der dargestellten Ausführungsform von der Bewegung der Knüpferwelle 3 auf die Knüpferscheibe 4 übertragen. Die Knüpferscheibe 4 ist zu diesem Zweck auf der Knüpferwelle 3 derart fixiert, dass eine Übertragung der Drehbewegung möglich ist. Die Knüpferscheibe 4 weist eine Verzahnung 5 - zumindest auf einem Teilbereich ihres äußeren Umfangs - auf, über welche das Knoterritzel 6 angetrieben wird. Das Knoterritzel 6 überträgt die Drehbewegung an den Antriebsstrang, die Antriebswelle 13, auf welcher auch das Stirnrad 7 und ein Knoterschnabel 2.1 sitzt. Über das Stirnrad 7 der Antriebswelle 13 wird die Drehbewegung an ein benachbartes und mit dem ersten Stirnrad im Eingriff stehendes zweites Stirnrad 7 übertragen, welches wiederum mit einer Abtriebswelle 14 verbunden ist. Die derart angetriebene Abtriebswelle 14 überträgt die Drehbewegung auf den mit der Abtriebswelle 14 verbundenen zweiten Knoterschnabel 2.2.

In zeitlicher Überlagerung zum Knotenbildungsprozesses geht der mittlere Fadenandrücker 11 zurück und gibt die notwendige Fadenreserve zur Knotenbildung frei. Die Fadenspannung des Fadenstranges 15, 16 führt zum Anlegen des Fadenstranges an das Messer der Klinke 10.

Nachfolgend schließt sich das Abziehen der Knoten von den Knoterschnäbeln 2.1, 2.2 durch diesen zugeordnete Knotenabzieher 12 an, wobei der Doppelfadenstrang 15, 16 mittig zwischen den Knoterschnäbeln 2.1 und 2.2 rückstandsfrei zertrennt wird. Die Nadel 8 schwenkt zurück in die Ausgangslage und der nächste Zyklus kann beginnen.

### LISTE DER BEZUGSZEICHEN

- 1: Knotereinrichtung
- 2: Knoterschnabel
- 2.1: Knoterschnabel Abschlussknoten
- 2.2: Knoterschnabel Anfangsknoten
- 3: Knüpferwelle
- 4: Knüpferscheibe
- 5: Verzahnung
- 6: Knoterritzel
- 7: Stirnrad
- 8: Nadel
- 9: seitliche Fadenandrücker
- 10: Klinke mit Messer
- 11: mittlerer Fadenandrücker
- 12: Knotenabzieher
- 13: Antriebswelle
- 14: Abtriebswelle
- 15: Oberfaden
- 16: Unterfaden
- 17: Großballen, Pressballen
- 18: Nocken
- 19: Zunge
- 20: Knoterrahmen
- 21: Schlitz im mittleren Fadenandrücker 11

## Patentansprüche

1. Knotereinrichtung (1) zur gleichzeitigen Bildung von zwei Knoten, **dadurch gekennzeichnet, dass** ein Knoterritzel (6), ein Stirnrad (7) und ein Knoterschnabel (2.1) auf einer Antriebswelle (13) angeordnet sind und dass auf einer dazu beabstandeten Abtriebswelle (14) ein zweites Stirnrad (7) und ein zweiter Knoterschnabel (2.2) angeordnet sind, wobei die zwei Stirnräder (7) miteinander in Eingriff stehen und die beiden Wellen (13, 14) mit den Knoterschnäbeln (2.1, 2.2) damit gleichzeitig und gegensinnig bewegbar ausgebildet sind, wobei die Antriebswelle (13) über das Knoterritzel (6) antreibbar ausgebildet ist und die Knoterschnäbel (2.1, 2.2) in ihrer Form spiegelbildlich zu einer Mittelebene zwischen den beiden Knoterschnäbeln (2.1, 2.2) ausgeführt sind.

2. Knotereinrichtung nach Anspruch 1, **dadurch gekennzeichnet, dass** eine auf einer Knüpferwelle (3) angeordnete Knüpferscheibe (4) zum Antrieb des Knoterritzels (6) vorgesehen ist, wobei die Knüpferscheibe (4) eine mit dem Knoterritzel (6) korrespondierende Verzahnung (5) aufweist.

3. Knotereinrichtung nach Anspruch 1 oder 2, **dadurch gekennzeichnet, dass** zwei seitliche Fadenandrücker (9) den Knoterschnäbeln (2.1, 2.2) zugeordnet sind und dass ein mittlerer Fadenandrücker (11) vorgesehen ist, der zwischen den Knoterschnäbeln (2.1, 2.2) einschwenkbar angeordnet ist.

4. Knotereinrichtung nach Anspruch 3, **dadurch gekennzeichnet, dass** dem mittleren Fadenandrücker (11) eine Klinke mit Messer (10) zugeordnet ist.

5. Knotereinrichtung nach Anspruch 4, **dadurch gekennzeichnet, dass** der mittlere Fadenandrücker (11) an seinem schwenkbaren Ende derart mit einem Schlitz (21) ausgeführt ist, dass die Klinke mit Messer (10) zum Ende der Einschwenkbewegung hin durch den Schlitz (21) hindurch zurück in die Ausgangsstellung klappt.

6. Knotereinrichtung nach einem der Ansprüche 3 bis 5, **dadurch gekennzeichnet, dass** der mittlere Fadenandrücker (11) eine Eingrifflänge zur Bildung einer Fadenreserve aufweist.

7. Knotereinrichtung nach einem der Ansprüche 3 bis 6, **dadurch gekennzeichnet, dass** der mittlere Fadenandrücker (11) mittels einer Steuerbahn in der Knüpferscheibe (4) bewegt wird.

8. Knotereinrichtung nach einem der Ansprüche 3 bis 7, **dadurch gekennzeichnet, dass** der mittlere Fadenandrücker (11) am unteren Ende eine konkave Form zur Aufnahme und Positionierung von Ober- und Unterfaden (15, 16) aufweist.

9. Knotereinrichtung nach einem der Ansprüche 1 bis 8, **dadurch gekennzeichnet, dass** den Knoterschnäbeln (2.1, 2.2) Knotenabzieher (12) zugeordnet sind.

10. Knotereinrichtung nach Anspruch 9, **dadurch gekennzeichnet, dass** die Knotenabzieher (12) auf einer Welle gelagert und unter den Knoterschnäbeln (2.1, 2.2) miteinander verbunden sind.

11. Knotereinrichtung nach einem der Ansprüche 1 bis 10, **dadurch gekennzeichnet, dass** die Antriebswelle (13) und die Abtriebswelle (14) parallel zueinander beabstandet sind.

12. Verfahren zur Erzeugung von zwei Knoten mittels einer Vorrichtung gemäß der vorangehenden Ansprüche, bei dem bei einer Umdrehung der Knüpferwelle (3)
- eine Nadel (8) mittels einer Einschwenkbewegung den Unterfaden (16) zum Oberfaden (15) führt und die Fäden (15, 16) an den Knoterschnäbeln (2.1, 2.2) positioniert werden,
- wobei nachfolgend durch Einschwenken des mittleren Fadenandrückers (11) eine Fadenreserve zur Bildung der Knoten gebildet wird und dabei die Fadenstränge hinter der Klinke (10) positioniert werden und dass
- die seitlichen Fadenandrücker (9) den Ober- und Unterfaden (15, 16) beidseits an den Knoterschnäbeln (2.1, 2.2) fixieren und dass
- die beiden Knoten gleichzeitig bei gegensinniger Bewegung der Knoterschnäbel (2.1, 2.2) gebildet werden und
- der mittlere Fadenandrücker (11) zeitlich gesteuert während der Knotenbildung zurückschwenkt und
- die Fäden (15, 16) beim Abstreifen der beiden gebildeten Knoten mittels der den Knoterschnäbeln (2.1, 2.2) zugeordneten Knotenabziehern (12) durch die Klinke mit dem Messer (10) mittig zertrennt werden und nachfolgend
- die Nadel (8) in die Ausgangsstellung zurückschwenkt.

## Claims

1. A knotting device (1) for the simultaneous formation of two knots, **characterised in that** a knotter pinion (6), a spur gear (7) and a knotter beak (2.1) are disposed on a drive shaft (13) and that a second spur gear (7) and a second knotter beak (2.2) are disposed on a driven shaft (14) at a distance therefrom, wherein the two spur gears (7) are in engagement and the two shafts (13, 14) with the knotter beaks (2.1, 2.2) are therefore configured to be movable simultaneously and in opposite directions, wherein the drive shaft (13) is configured to be drivable by means of the knotter pinion (6) and the knotter beaks (2.1, 2.2) are designed to be mirror-symmetrical in their shape with respect to a central plane between said two knotter beaks (2.1, 2.2).

2. The knotting device according to claim 1, **characterised in that** a twine disk (4) disposed on a twine shaft (3) is provided for driving the knotter pinion (6), wherein the twine disk (4) has a toothed structure (5) corresponding to the knotter pinion (6).

3. The knotting device according to claim 1 or 2, **characterised in that** two lateral twine pressers (9) are assigned to the knotter beaks (2.1, 2.2) and that a central twine presser (11) is provided which is disposed pivotably between the knotter beaks (2.1, 2.2).

4. The knotting device according to claim 3, **characterised in that** a pawl with knife (10) is assigned to the central twine presser (11).

5. The knotting device according to claim 4, **characterised in that** at its pivotable end the central twine presser (11) is designed with a slit (21) in such a manner that the pawl with knife (10) folds back through the slit (21) into the initial position towards the end of the pivoting movement.

6. The knotting device according to any one of claims 3 to 5, **characterised in that** the central twine presser (11) has an engagement length for forming a twine reserve.

7. The knotting device according to any one of claims 3 to 6, **characterised in that** the central twine presser (11) is moved by means of a control path in the twine disk (4).

8. The knotting device according to any one of claims 3 to 7, **characterised in that** at its lower end the central twine presser (11) has a concave shape for receiving and positioning upper and lower twines (15, 16).

9. The knotting device according to any one of claims 1 to 8, **characterised in that** knot pullers (12) are assigned to the knotter beaks (2.1, 2.2).

10. The knotting device according to claim 9, **characterised in that** the knot pullers (12) are mounted on a shaft and are interconnected under the knotter beaks (2.1, 2.2).

11. The knotting device according to any one of claims 1 to 10, **characterised in that** the drive shaft (13) and the driven shaft (14) are spaced parallel apart from one another.

12. A method for producing two knots by means of a device according to the preceding claims, wherein during a revolution of the twine shaft (3)
- a needle (8) guides the lower twine (16) towards the upper twine (15) by means of a pivoting movement and the twines (15, 16) are positioned on the knotter beaks (2.1, 2.2),
- wherein subsequently by pivoting the central twine presser (11) a twine reserve is formed to form the knots and the twine strands are thereby positioned behind the pawl (10), and that
- the lateral twine pressers (9) fix the upper and lower twine (15, 16) on both sides of the knotter beaks (2.1, 2.2) and that
- the two knots are formed simultaneously whilst the knotter beaks (2.1, 2.2) move in opposite directions and
- the central twine presser (11) is pivoted back in a time-controlled manner during the knot formation and
- when stripping the two knots which have been formed, the twines (15, 16) are separated centrally by the pawl with the knife (10) by means of the knot pullers (12) assigned to the knotter beaks (2.1, 2.2) and subsequently,
- the needle (8) pivots back into the initial position.

## Revendications

1. Dispositif noueur (1) pour la formation simultanée de deux noeuds, **caractérisé en ce qu'**un pignon de noueur (6), une roue droite (7) et un bec de noueur (2.1) sont disposés sur un arbre moteur (13) et qu'un deuxième pignon droit (7) et un deuxième bec de noueur (2.2) sont disposés sur un arbre mené(14) espacé de celui-ci, les deux pignons droits (7) étant en prise l'un avec l'autre et les deux arbres (13, 14) avec les becs de noueur (2.1, 2.2) étant ainsi réalisés de manière à être mobiles simultanément et en sens inverse, l'arbre moteur (13) étant réalisé de manière à pouvoir être entraîné par le pignon de noueur (6) et les becs de noueur (2.1, 2.2) étant réalisés avec une forme symétrique en miroir à un plan médian entre les deux becs de noueur (2.1, 2.2).

2. Dispositif noueur selon la revendication 1, **caractérisé en ce qu'**un disque noueur (4) disposé sur un arbre noueur (3) est prévu pour entraîner le pignon de noueur (6), le disque noueur (4) présentant une denture (5) correspondant au pignon de noueur (6).

3. Dispositif noueur selon la revendication 1 ou 2, **caractérisé en ce que** deux compresseurs de fil latéraux (9) sont associés aux becs de noueur (2.1, 2.2) et qu'un compresseur de fil médian (11) qui est disposé de manière à pouvoir pivoter entre les becs de noueur (2.1, 2.2) est prévu.

4. Dispositif noueur selon la revendication 3, **caractérisé en ce qu'**un cliquet à lame (10) est associé au compresseur de fil médian (11).

5. Dispositif noueur selon la revendication 4, **caractérisé en ce que** le compresseur de fil médian (11) est réalisé à son extrémité pivotable avec une fente (21) de manière à ce que le cliquet à lame (10), à la fin du mouvement de pivotement, puisse revenir à travers la fente (21) dans sa position initiale.

6. Dispositif noueur selon une des revendications 3 à 5, **caractérisé en ce que** le compresseur de fil médian (11) présente une longueur d'engrènement destinée à former une réserve de fil.

7. Dispositif noueur selon une des revendications 3 à 6, **caractérisé en ce que** le compresseur de fil médian (11) est déplacé au moyen d'une piste de commande dans le disque noueur (4).

8. Dispositif noueur selon une des revendications 3 à 7, **caractérisé en ce que** le compresseur de fil médian (11) présente à son extrémité inférieure une forme concave destinée à recevoir et positionner les fils supérieur et inférieur (15, 16).

9. Dispositif noueur selon une des revendications 1 à 8, **caractérisé en ce que** des extracteurs de noeuds (12) sont associés aux becs de noueur (2.1, 2.2).

10. Dispositif noueur selon la revendication 9, **caractérisé en ce que** les extracteurs de noeuds (12) s'appuient sur un arbre et sont reliés entre eux sous les becs de noueur (2.1, 2.2).

11. Dispositif noueur selon une des revendications 1 à 10, **caractérisé en ce que** l'arbre moteur (13) et l'arbre mené (14) sont espacés parallèlement l'un de l'autre.

12. Procédé de réalisation de deux noeuds au moyen d'un dispositif selon les revendications précédentes, dans lequel, lors d'une rotation de l'arbre noueur (3),
- une aiguille (8) guide le fil inférieur (16) vers le fil supérieur (15) au moyen d'un mouvement de pivotement et les fils (15, 16) sont positionnés au niveau des becs de noueur (2.1, 2.2),
- une réserve de fil pour la formation des noeuds étant ensuite formée par pivotement du compresseur de fil médian (11) et les faisceaux de fils étant alors positionnés derrière le cliquet (10), et
- les compresseurs de fil latéraux (9) fixent les fils inférieur et supérieur (15, 16) des deux côtés des becs de noueur (2.1, 2.2) et
- les deux noeuds sont formés en même temps lors du mouvement en sens inverse des becs de noueur (2.1, 2.2) et
- le compresseur de fil médian (11) repivote vers l'arrière de manière temporisée pendant la formation du noeud et
- les fils (15, 16), lors du raclage des deux noeuds formés au moyen des deux extracteurs de noeuds (12) associés aux becs de noueur (2.1, 2.2) sont sectionnés au milieu par le cliquet à lame (10) puis
- l'aiguille (8) repivote dans sa position initiale.
